# EUROPEAN PATENT APPLICATION

(11) **EP 4 794 064 A1**
(43) Date of publication of application: **19.08.2026**
(21) Application number: 25777743.3
(22) Date of filing: 26.02.2025
(51) Int. Cl.: H01M 50/103, H01M 50/14, H01M 10/058, H01M 10/0525

(54) **SECONDARY BATTERY AND ELECTROCHEMICAL DEVICE**

(30) Priority: 26.03.2024 CN 202410353884
(71) Applicant: Ningde Amperex Technology Limited, Ningde, Fujian 352100 (CN)
(72) Inventor: GUO, Xi, Ningde, Fujian 352100 (CN)
(74) Representative: Dehns Germany Partnerschaft mbB
(86) International application number: PCT/CN2025/079354
(87) International publication number: WO 2025/200914

(57) **Abstract**

Some embodiments of this application provide a secondary battery and an electrochemical device. The secondary battery includes an electrode assembly and a shell. The shell is configured to accommodate the electrode assembly. The shell includes a first wall and a second wall opposite to each other along a thickness direction of the electrode assembly. The first wall is provided with a first protruding portion that protrudes toward an inside of the shell. The shell further includes a third wall. The third wall connects the first wall and the second wall. The third wall is spaced apart from the electrode assembly along a first direction. The first direction is perpendicular to a thickness direction of the electrode assembly. Along the thickness direction of the electrode assembly, a dimension of an inner surface of the third wall is L₁, a thickness of the electrode assembly is L₂, and a height by which the first protruding portion protrudes beyond an inner surface of the first wall is L₃, satisfying: L₃ > L₁ - L₂. The technical solutions provided herein can improve the reliability and safety performance of the secondary battery.

## Description

### CROSS-REFERENCE TO RELATED APPLICATIONS

This application claims priority to Chinese Patent Application No. CN202410353884.2, filed on March 26, 2024 and entitled "SECONDARY BATTERY AND ELECTROCHEMICAL DEVICE", which is incorporated herein by reference in its entirety.

### TECHNICAL FIELD

This application relates to the technical field of secondary batteries, and in particular, to a secondary battery and an electrochemical device.

### BACKGROUND

As a type of lithium-ion batteries, hard-shell batteries are superior to pouch batteries in terms of safety and volumetric energy density, and therefore, are increasingly important in the field of consumer electronics.

A main reason for failure of hard-shell batteries during a drop is that the internal electrode assembly is displaced relative to the shell and impacts the shell, thereby causing relatively weak welds on the shell to crack, and in turn, resulting in electrolyte leakage and swelling of the battery, and ultimately posing a series of safety hazards.

### SUMMARY

This application provides a secondary battery and an electrochemical device to improve the reliability and safety performance of the secondary battery.

This application is implemented through the following technical solutions:
According to a first aspect, an embodiment of this application provides a secondary battery. The secondary battery includes an electrode assembly and a shell. The shell is configured to accommodate the electrode assembly. The shell includes a first wall and a second wall opposite to each other along a thickness direction of the electrode assembly. The first wall is provided with a first protruding portion that protrudes toward an inside of the shell. The shell further includes a third wall. The third wall connects the first wall and the second wall. The third wall is spaced apart from the electrode assembly along a first direction. The first direction is perpendicular to a thickness direction of the electrode assembly. Along the thickness direction of the electrode assembly, a dimension of an inner surface of the third wall is L₁, a thickness of the electrode assembly is L₂, and a height by which the first protruding portion protrudes beyond an inner surface of the first wall is L₃, satisfying: L₃ ≥ L₁ - L₂.

In the secondary battery according to this embodiment of this application, the first protruding portion protrudes toward the inside of the shell. Along the first direction, the projection of the first protruding portion partially overlaps the projection of the electrode assembly. When the electrode assembly moves relative to the shell along the first direction, the first protruding portion can block the electrode assembly from moving relative to the shell. At the same time, the first protruding portion disperses the force generated by the movement of the electrode assembly relative to the shell, so that the force does not directly impact the weakest weld region of the shell, thereby reducing the risk of weld cracking, endowing the secondary battery with relatively high reliability, and improving the safety performance of the secondary battery.

In one or more optional embodiments, L₃ ≤ L₂/3, and 0.14 mm ≤ L₃ ≤ 2.73 mm.

In the above technical solution, the protruding height of the first protruding portion is relatively low, thereby facilitating the processing and manufacturing of the first protruding portion, and reducing the risk of interference between the first protruding portion and other components in the shell.

In one or more optional embodiments, the first protruding portion contacts a first end portion of the electrode assembly in the first direction.

In the above technical solution, because the first protruding portion contacts the first end portion of the electrode assembly in the first direction, the first protruding portion can prevent the electrode assembly from moving toward the first protruding portion relative to the shell in the first direction, thereby further improving the effect of the first protruding portion in blocking the electrode assembly.

In one or more optional embodiments, a first groove is formed on an outer surface of the first wall at a position corresponding to the first protruding portion.

In the above technical solution, the first wall may be formed by stamping a plate-like structure, thereby facilitating processing and manufacture.

In one or more optional embodiments, the first protruding portion extends along a second direction. The second direction, the first direction, and the thickness direction of the electrode assembly are perpendicular to each other.

In the above technical solution, the first protruding portion possesses a relatively long dimension in the second direction, so that the first protruding portion exerts a good effect of blocking the electrode assembly in the first direction.

In one or more optional embodiments, a cross-section of the first protruding portion is arc-shaped, rectangular, or conical, and the cross-section of the first protruding portion is perpendicular to the second direction.

In the above technical solution, the cross-section of the first protruding portion is arc-shaped, rectangular, or conical, thereby facilitating processing and manufacture.

In one or more optional embodiments, the electrode assembly includes a first end portion in the first direction. The shell further includes a fourth wall. The third wall and the fourth wall are disposed opposite to each other along the first direction. The third wall is disposed opposite to the first end portion in the first direction. The third wall is closer to the first end portion than the fourth wall. Along the first direction, at least a part of the first protruding portion is located between the first end portion and the third wall.

In the above technical solution, along the first direction, at least a part of the first protruding portion is located between the first end portion and the third wall. The first protruding portion restricts the electrode assembly from moving relative to the shell toward the third wall, exerts a good effect of blocking the electrode assembly, disperses the force of the electrode assembly generated by movement relative to the shell toward the third wall, and reduces the impact of the movement of the electrode assembly on the weak part of the shell.

In one or more optional embodiments, the secondary battery further includes a tab. The tab is connected to the first end portion. The tab extends out of the first end portion along the first direction. Along the first direction, a minimum distance between the first protruding portion and the inner surface of the third wall is L₄, satisfying: 0.05 mm ≤ L₄ ≤ 1 mm.

In the above technical solution, the tab is connected to the first end portion. An assembling space is reserved between the tab and the third wall. The first protruding portion reasonably utilizes the assembling space inside the shell, and reduces the adverse effect on the energy density of the secondary battery. The minimum distance between the first protruding portion and the inner surface of the third wall satisfies the above relationship, thereby facilitating processing and manufacture on the one hand, and reducing the risk of interference between the first protruding portion and the third wall, and on the other hand, occupying relatively small space in the first direction, and reducing the adverse effect on the energy density of the secondary battery.

In one or more optional embodiments, along the first direction, a minimum distance between the first end portion and the inner surface of the third wall is L₅, satisfying: 0.17 mm ≤ L₅ ≤ 1.5 mm. A width of the first protruding portion is L₆, satisfying: 0.4 ≤ L₆/L₅ < 1.

In the above technical solution, the minimum distance between the first end portion and the inner surface of the third wall satisfies the above relationship, thereby reserving an assembling space on the one hand, reducing the risk of contact shorting between the electrode assembly and the third wall, and on the other hand, occupying relatively small space in the first direction, and reducing the adverse effect on the energy density of the secondary battery. The minimum distance between the first end portion and the inner surface of the third wall as well as the width of the first protruding portion satisfy the above relationship. Therefore, on the one hand, the first protruding portion is relatively wide and facilitates processing and manufacture. On the other hand, the first protruding portion occupies just a relatively small space in the first direction, thereby reducing the adverse effect on the energy density of the secondary battery.

In one or more optional embodiments, the first wall is further provided with a second protruding portion that protrudes toward the inside of the shell. The second protruding portion is spaced apart from the first protruding portion along the first direction. The electrode assembly further includes a second end portion disposed opposite to the first end portion in the first direction. The fourth wall is closer to the second end portion than the third wall. Along the first direction, a projection of the second protruding portion partially overlaps a projection of the electrode assembly. At least a part of the second protruding portion is located between the second end portion and the fourth wall. Along the first direction, a minimum distance between the second protruding portion and an inner surface of the fourth wall is L₇, satisfying: 0.05 mm ≤ L₇ ≤ 0.5 mm.

In the above technical solution, the second protruding portion coordinates with the first protruding portion to block the two opposite ends of the electrode assembly in the first direction and restrict the electrode assembly from moving relative to the shell in the first direction. At the same time, the first protruding portion and/or the second protruding portion disperses the force generated by the movement of the electrode assembly relative to the shell, so that the force does not directly impact the weakest weld region of the shell, thereby reducing the risk of weld cracking, endowing the secondary battery with relatively high reliability, and improving the safety performance of the secondary battery. The minimum distance between the second protruding portion and the inner surface of the fourth wall satisfies the above relationship, thereby facilitating processing and manufacture on the one hand, and reducing the risk of interference between the second protruding portion and the fourth wall, and on the other hand, reducing the space occupation in the first direction, and reducing the adverse effect on the energy density of the secondary battery.

In one or more optional embodiments, the first wall is further provided with a third protruding portion that protrudes toward the inside of the shell. The shell further includes a fifth wall. Two ends of the fifth wall in the first direction are connected to the third wall and the fourth wall respectively. Two ends of the fifth wall in the thickness direction of the electrode assembly are connected to the first wall and the second wall respectively. The electrode assembly further includes a third end portion in a second direction. The second direction, the first direction, and the thickness direction of the electrode assembly are perpendicular to each other. Along the second direction, at least a part of the third protruding portion is located between the third end portion and the fifth wall. Along the second direction, a projection of the third protruding portion partially overlaps a projection of the electrode assembly. The third protruding portion extends along the first direction. One end, close to the first protruding portion, of the third protruding portion is spaced apart from the first protruding portion. Along the first direction, a distance between the inner surface of the third wall and an inner surface of the fourth wall is L₈, and a length of the third protruding portion is L₉, satisfying: 0.6L₈ ≤ L₉ ≤ 0.9L₈.

In the above technical solution, with the third protruding portion disposed, when the electrode assembly moves relative to the shell along the second direction, the third protruding portion can contact the electrode assembly to block the electrode assembly from moving relative to the shell. At the same time, the third protruding portion disperses the force generated by the movement of the electrode assembly relative to the shell, so that the force does not directly impact the weakest weld region of the shell, thereby reducing the risk of weld cracking, endowing the secondary battery with relatively high reliability, and improving the safety performance of the secondary battery. The third protruding portion possesses a relatively long dimension in the first direction, so that the third protruding portion exerts a good effect of blocking the electrode assembly in the second direction. The length of the third protruding portion as well as the distance between the inner surface of the third wall and the inner surface of the fourth wall satisfy the above relationship. Therefore, on the one hand, when the electrode assembly moves relative to the shell along the second direction, the third protruding portion can contact the electrode assembly on a relatively large contact area, and the third protruding portion exerts a good effect of blocking the electrode assembly. On the other hand, the processing and manufacturing of the third protruding portion are facilitated, thereby reducing the risk of interference between the third protruding portion and the third wall or the fourth wall.

In one or more optional embodiments, the first wall is further provided with a second protruding portion, a third protruding portion, and a fourth protruding portion that protrude toward the inside of the shell. The second protruding portion is spaced apart from the first protruding portion along the first direction. The third protruding portion is spaced apart from the fourth protruding portion along a second direction. The second direction, the first direction, and the thickness direction of the electrode assembly are perpendicular to each other. The electrode assembly further includes a second end portion, a third end portion, and a fourth end portion. The second end portion is disposed opposite to the first end portion along the first direction. The third end portion is disposed opposite to the fourth end portion along the second direction. The fourth wall is closer to the second end portion than the third wall. The shell further includes a fifth wall and a sixth wall disposed opposite to each other along the second direction. The fifth wall is closer to the third end portion than the sixth wall. The sixth wall is closer to the fourth end portion than the fifth wall. Along the first direction, a projection of the second protruding portion partially overlaps a projection of the electrode assembly. At least a part of the second protruding portion is located between the second end portion and the fourth wall. Along the second direction, a projection of the third protruding portion partially overlaps the projection of the electrode assembly. At least a part of the third protruding portion is located between the third end portion and the fifth wall. A projection of the fourth protruding portion partially overlaps the projection of the electrode assembly. At least a part of the fourth protruding portion is located between the fourth end portion and the sixth wall.

In the above technical solution, the second protruding portion coordinates with the first protruding portion to block the two opposite ends of the electrode assembly in the first direction and restrict the electrode assembly from moving relative to the shell in the first direction. The third protruding portion coordinates with the fourth protruding portion to block the two opposite ends of the electrode assembly in the second direction and restrict the electrode assembly from moving relative to the shell in the second direction. At the same time, the first protruding portion, the second protruding portion, the third protruding portion, and the fourth protruding portion disperse the force generated by the movement of the electrode assembly relative to the shell in a plane perpendicular to the thickness direction of the electrode assembly, so that the force does not directly impact the weakest weld region of the shell, thereby further endowing the secondary battery with relatively high reliability, and improving the safety performance of the secondary battery.

In one or more optional embodiments, the shell further includes a fifth wall and a sixth wall disposed opposite to each other along a second direction. The second direction, the first direction, and the thickness direction of the electrode assembly are perpendicular to each other. Along the second direction, a distance between an inner surface of the fifth wall and an inner surface of the sixth wall is L₁₀, satisfying at least one of the following conditions: (1) along the second direction, a length of the first protruding portion is L₁₁, satisfying: 0.6L₁₀ ≤ L₁₁ ≤ 0.9L₁₀; or (2) along the second direction, a minimum distance between the first protruding portion and the inner surface of the fifth wall is L₁₂, satisfying: 2 mm ≤ L₁₂ ≤ 0.2L₁₀.

In the above technical solution, in a case that the length of the first protruding portion as well as the distance between the inner surface of the fifth wall and the inner surface of the sixth wall satisfy the above relationship (0.6L₁₀ ≤ L₁₁ ≤ 0.9L₁₀), on the one hand, when the electrode assembly moves relative to the shell along the first direction, the first protruding portion can contact the electrode assembly on a relatively large contact area, and the first protruding portion exerts a good effect of blocking the electrode assembly. On the other hand, the processing and manufacturing of the first protruding portion are facilitated, thereby reducing the risk of interference between the first protruding portion and the fifth wall or the sixth wall. When the minimum distance between the first protruding portion and the inner surface of the fifth wall as well as the distance between the inner surface of the fifth wall and the inner surface of the sixth wall satisfy the above relationship (2 mm ≤ L₁₂ ≤ 0.2L₁₀), on the one hand, the risk of interference between the first protruding portion and the fifth wall is reduced. On the other hand, the distance between the first protruding portion and the inner surface of the fifth wall is relatively small, thereby reducing the space waste in the second direction and reducing the adverse effect on the energy density of the secondary battery.

In one or more optional embodiments, the shell includes a housing and a cover. The housing is provided with an opening. The cover closes the opening. The first wall is the cover.

In the above technical solution, the first wall is a cover, thereby facilitating the processing and manufacture of the first protruding portion, and facilitating the assembling of the electrode assembly to the shell.

In one or more optional embodiments, the secondary battery further includes a first bonding piece. The first bonding piece bonds the first wall to the electrode assembly.

In the above technical solution, the first bonding piece bonds the first wall to the electrode assembly, thereby restricting the electrode assembly from moving relative to the first wall, and reducing the risk of impact of the electrode assembly on the weld of the shell.

According to a second aspect, an embodiment of this application further provides an electrochemical device. The electrochemical device contains the secondary battery provided in any one of the above embodiments.

Additional aspects and advantages of this application will be partly given in the following description, and a part thereof will become evident in the following description or will be learned in the practice of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a three-dimensional diagram of a secondary battery according to some embodiments of this application;
FIG. 2 is a top view of a secondary battery according to some embodiments of this application;
FIG. 3 is a cross-sectional view of sectioning along an A-A line shown in FIG. 2;
FIG. 4 is a close-up view of a part B shown in FIG. 3;
FIG. 5 is a schematic structural diagram of a first protruding portion with a rectangular cross-section according to some embodiments of this application;
FIG. 6 is a schematic structural diagram of a first protruding portion with a conical cross-section according to some embodiments of this application;
FIG. 7 is a cross-sectional view of a secondary battery according to some embodiments of this application;
FIG. 8 is a cross-sectional view of sectioning along a C-C line shown in FIG. 2;
FIG. 9 is a schematic diagram of assembling a first bonding piece, a first wall, and an electrode assembly according to some embodiments of this application; and
FIG. 10 is a schematic structural diagram of a first bonding piece according to some embodiments of this application.

List of reference numerals: 100-secondary battery; 10-electrode assembly; 11-first end portion; 12-second end portion; 13-third end portion; 14-fourth end portion; 15-positive electrode plate; 16-negative electrode plate; 17-separator; 20-shell; 21-first wall; 210-first body; 211-first protruding portion; 212-first groove; 213-second protruding portion; 214-third protruding portion; 215-fourth protruding portion; 22-second wall; 23-third wall; 24-fourth wall; 25-fifth wall; 26-sixth wall; 27-shell; 28-cover; 30-tab; 30a-negative tab; 31-negative electrode connection strap; 41-first bonding piece; 411-first substrate layer; 412-first bonding layer; 413-second bonding layer; 42-second bonding piece; X-first direction; Y-second direction; Z-thickness direction of the electrode assembly.

### DETAILED DESCRIPTION

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

As used herein, the term "and/or" indicates merely a relation between related items, and represents three possible relationships. For example, "A and/or B" may represent the following three circumstances: A alone, both A and B, and B alone. In addition, the character "/" herein generally indicates an "or" relationship between the item preceding the character and the item following the character.

"A plurality of" referred to in this application means two or more (including two). Similarly, "a plurality of groups" means two or more groups (including two groups), and "a plurality of pieces" means two or more pieces (including two pieces).

When a secondary battery (hard-shell battery) is dropped, the shell is prone to be damaged, thereby causing the secondary battery to fail. After research, it is found that the main reasons for the failure of the secondary battery in a dropping process are as follows: An electrode assembly in the shell moves relative to the shell, thereby impacting the shell and causing the weakest weld region of the shell to crack, and in turn, resulting in electrolyte leakage and causing the secondary battery to fail.

To solve the problem of failure of the secondary battery caused by the impact of the electrode assembly on the shell, this application provides a technical solution. In the technical solution, a secondary battery includes a shell and an electrode assembly. The electrode assembly is disposed inside the shell. The shell includes a first wall. The first wall is provided with a first protruding portion that protrudes toward the inside of the shell. The shell further includes a third wall. The third wall connects the first wall and the second wall. The third wall is spaced apart from the electrode assembly along a first direction. The first direction is perpendicular to a thickness direction of the electrode assembly. Along the thickness direction of the electrode assembly, a dimension of an inner surface of the third wall is L₁, a thickness of the electrode assembly is L₂, and a height by which the first protruding portion protrudes beyond an inner surface of the first wall is L₃, satisfying: L₃ ≥ L₁ - L₂. The electrode assembly is a flat structure. The electrode assembly is accommodated in the shell. Along the first direction, the projection of the first protruding portion partially overlaps the projection of the electrode assembly. When the electrode assembly moves relative to the shell along the first direction, the first protruding portion can block the electrode assembly from moving relative to the shell. At the same time, the first protruding portion disperses the force generated by the movement of the electrode assembly relative to the shell, so that the force does not directly impact the weakest weld region of the shell, thereby reducing the risk of weld cracking, endowing the secondary battery with relatively high reliability, and improving the safety performance of the secondary battery.

The secondary battery according to an embodiment of this application may be a hard-shell battery. The secondary battery may be a lithium-ion battery, a sodium-ion battery, a magnesium-ion battery, or the like.

The following describes the structure of a secondary battery provided in an embodiment of this application with reference to drawings.

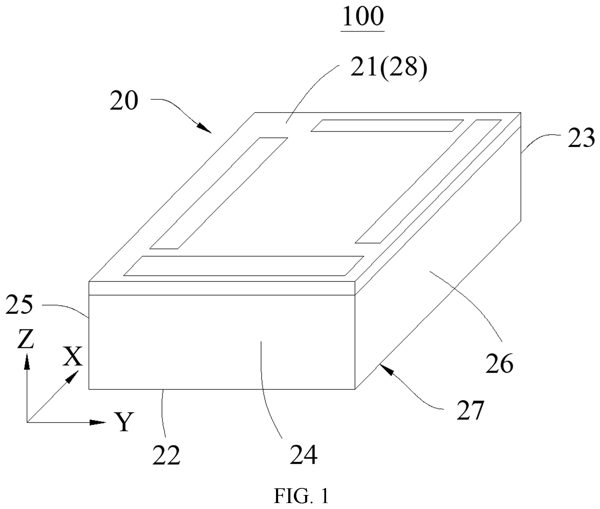

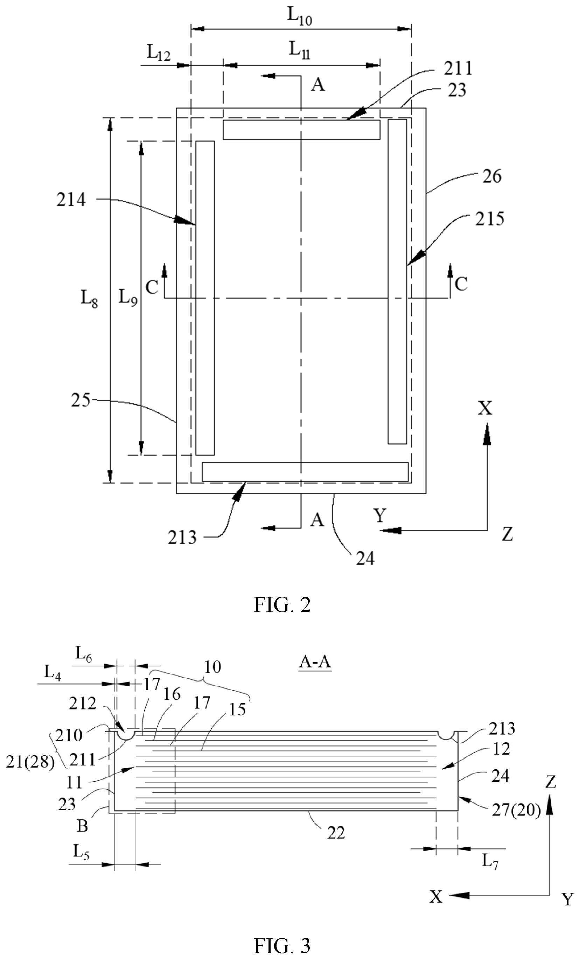

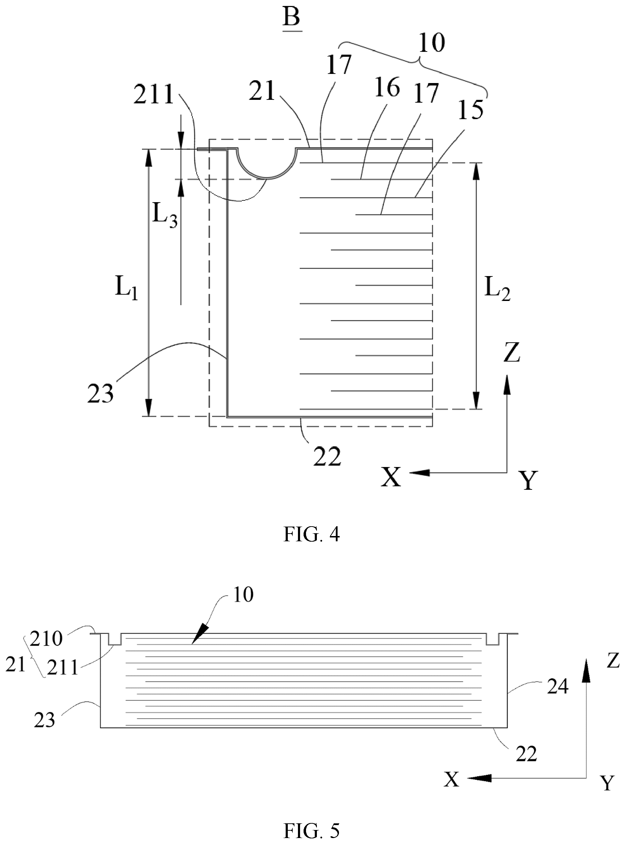

Referring to FIG. 1 to FIG. 4, FIG. 1 is a three-dimensional diagram of a secondary battery according to some embodiments of this application; FIG. 2 is a top view of a secondary battery according to some embodiments of this application; FIG. 3 is a cross-sectional view of sectioning along an A-A line shown in FIG. 2; and FIG. 4 is a close-up view of a part B shown in FIG. 3.

An embodiment of this application provides a secondary battery 100. The secondary battery includes an electrode assembly 10 and a shell 20. The shell 20 is configured to house the electrode assembly 10, and the electrode assembly 10 is accommodated in the shell 20.

The shell 20 provides an accommodation space for accommodating the electrode assembly 10. The shell 20 forms a closed environment to prevent electrolyte leakage.

The shell 20 may be a steel shell or an aluminum shell. When the shell 20 is an aluminum shell, the material of the shell 20 may be aluminum alloy.

The electrode assembly 10 includes a positive electrode plate 15 and a negative electrode plate 16. The positive electrode plate 15 and the negative electrode plate 16 may be stacked, or, the positive electrode plate 15 and the negative electrode plate 16 may be wound. The electrode assembly 10 is in a flat shape to reduce the space occupied by the electrode assembly 10. The electrode assembly 10 further includes a separator 17. The separator 17 is disposed between the positive electrode plate 15 and the negative electrode plate 16, and is configured to dielectrically isolate the positive electrode plate 15 from the negative electrode plate 16.

In some embodiments, the shell 20 includes a first wall 21 and a second wall 22 opposite to each other along the thickness direction Z of the electrode assembly. The electrode assembly 10 is located between the first wall 21 and the second wall 22. The first wall 21 is provided with a first protruding portion 211 that protrudes toward the inside of the shell 20.

In some embodiments, the first wall 21 includes a first body 210 and a first protruding portion 211. The first protruding portion 211 protrudes from an inner surface of the first body 210. The inner surface of the first body 210 is a surface, oriented toward the electrode assembly 10, of the first body 210.

The first protruding portion 211 may be separate from the first body 210, and the first protruding portion 211 is fixed to the first body 210. For example, the first protruding portion 211 is connected to the first body 210 by welding, riveting, adhesive bonding, snap-fitting, or threaded connection.

The first protruding portion 211 and the first body 210 may be formed in one piece. To be specific, the first wall 21 may be formed by stamping one sheet so that the first protruding portion 211 protrudes beyond the inner surface of the first body 210.

In some embodiments, the shell 20 further includes a third wall 23. The third wall 23 is connected to the first wall 21 and the second wall 22. Along the first direction X, the third wall 23 is spaced apart from the electrode assembly 10. The first direction X is perpendicular to the thickness direction Z of the electrode assembly. In other words, along the first direction X, the projection of the first protruding portion 211 partially overlaps the projection of the electrode assembly 10.

In some embodiments, along the thickness direction Z of the electrode assembly, the dimension of an inner surface of the third wall 23 is L₁, a thickness of the electrode assembly 10 is L₂, and a height by which the first protruding portion 211 protrudes beyond an inner surface of the first wall 21 is L₃, satisfying: L₃ ≥ L₁ - L₂.

In the drawing, the direction indicated by the letter X may be the first direction, and the direction indicated by the letter Z may be the thickness direction of the electrode assembly. In some embodiments, the secondary battery 100 may assume a cuboid shape. The first direction X may be parallel to the length direction of the secondary battery 100, or the first direction X may be parallel to the width direction of the secondary battery 100. The thickness direction Z of the electrode assembly may be parallel to the thickness direction of the secondary battery 100.

The height by which the first protruding portion 211 protrudes beyond the inner surface of the first wall 21 means the amount of dimension by which the first protruding portion 211 protrudes beyond the inner surface of the first wall 21 in a direction from the first wall 21 to the electrode assembly 10.

In the thickness direction Z of the electrode assembly, one end of the inner surface of the third wall 23 may be connected to the inner surface of the first wall 21, and another end of the inner surface of the third wall 23 may be connected to the inner surface of the second wall 22.

The first protruding portion 211 may be in contact with the electrode assembly 10, or the first protruding portion 211 may be spaced apart from the electrode assembly 10.

Viewed along the first direction X, the first protruding portion 211 partially overlaps the electrode assembly 10. When the electrode assembly 10 moves relative to the shell 20, after the electrode assembly 10 moves into contact with the first protruding portion 211, the first protruding portion 211 can constrain the movement of the electrode assembly 10 and disperse the force of the electrode assembly 10 generated by the movement relative to the shell 20, thereby reducing the impact of the force on the weakest weld region of the shell 20.

In the secondary battery 100 according to this embodiment of this application, the first protruding portion 211 protrudes toward the inside of the shell 20. Along the first direction X, the projection of the first protruding portion 211 partially overlaps the projection of the electrode assembly 10. When the electrode assembly 10 moves relative to the shell 20 along the first direction X, the first protruding portion 211 can block the electrode assembly 10 from moving relative to the shell 20. At the same time, the first protruding portion 211 disperses the force generated by the movement of the electrode assembly 10 relative to the shell 20, so that the force does not directly impact the weakest weld region of the shell 20, thereby reducing the risk of weld cracking, endowing the secondary battery 100 with relatively high reliability, and improving the safety performance of the secondary battery 100.

In one or more optional embodiments, L₃ ≤ L₂/3.

In the above technical solution, when L₃ ≤ L₂/3, the protruding height of the first protruding portion 211 is relatively low, thereby facilitating the processing and manufacturing of the first protruding portion 211, and reducing the risk of interference between the first protruding portion 211 and other components in the shell 20. For example, when the tab is disposed between the first end portion 11 and the third wall 23, the protruding height of the first protruding portion 211 is relatively small, thereby reducing the risk of interference between the first protruding portion 211 and the tab.

In some embodiments, 2.64 mm ≤ L1 ≤ 12.54 mm.

Optionally, L₁ may be, but is not limited to, 2.64 mm, 3.04 mm, 3.54 mm, 3.94 mm, 4.54 mm, 4.94 mm, 5.44 mm, 5.94 mm, 6.44 mm, 6.94 mm, 7.44 mm, 7.94 mm, 8.44 mm, 8.94 mm, 9.44 mm, 9.94 mm, 10.44 mm, 10.94 mm, 11.44 mm, 11.94 mm, or 12.54 mm.

In some embodiments, 2.5 mm ≤ L2 ≤ 12.4 mm.

Optionally, L₂ may be, but is not limited to, 2.5 mm, 2.9 mm, 3.4 mm, 3.9 mm, 4.4 mm, 4.9 mm, 5.4 mm, 5.9 mm, 6.4 mm, 6.9 mm, 7.4 mm, 7.9 mm, 8.4 mm, 8.9 mm, 9.4 mm, 9.9 mm, 10.4 mm, 10.9 mm, 11.4 mm, 11.9 mm, or 12.4 mm.

In some embodiments, 0.14 mm ≤ L3 ≤ 2.73 mm.

Optionally, L₃ may be, but is not limited to, 0.14 mm, 0.2 mm, 0.3 mm, 0.4 mm, 0.5 mm, 0.6 mm, 0.7 mm, 0.8 mm, 0.9 mm, 1 mm, 1.14 mm, 1.24 mm, 1.34 mm, 1.44 mm, 1.53 mm, 1.64 mm, 1.74 mm, 1.84 mm, 1.94 mm, 2.04 mm, 2.14 mm, 2.24 mm, 2.34 mm, 2.44 mm, 2.54 mm, 2.64 mm, or 2.73 mm. In one or more optional embodiments, the first protruding portion 211 contacts a first end portion 11 of the electrode assembly 10 in the first direction X.

The first end portion 11 is an end of the electrode assembly 10 in the first direction X. The electrode assembly 10 includes a positive electrode plate 15, a negative electrode plate 16, and a separator 17. The separator 17 is located between the positive electrode plate 15 and the negative electrode plate 16 that are adjacent to each other. In the first direction X, an end portion of the negative electrode plate 16 exceeds the positive electrode plate 15, an end portion of the separator 17 exceeds the negative electrode plate 16, and an end portion of the separator 17 is the first end portion 11. That the first protruding portion 211 contacts the first end portion 11 means that the first protruding portion 211 contacts the separator 17.

In some embodiments, along the thickness direction Z of the electrode assembly, the projection of the first protruding portion 211 may partially overlap the projection of the first end portion 11, or the projection of the first protruding portion 211 does not overlap the projection of the first end portion 11.

In the above technical solution, because the first protruding portion 211 contacts the first end portion 11 of the electrode assembly 10 in the first direction X, the first protruding portion 211 can prevent the electrode assembly 10 from moving toward the first protruding portion 211 relative to the shell 20 in the first direction X, thereby further improving the effect of the first protruding portion 211 in blocking the electrode assembly 10.

Referring to FIG. 3, in one or more optional embodiments, a first groove 212 is formed on the outer surface of the first wall 21 at a position corresponding to the first protruding portion 211.

During the manufacture of the secondary battery 100, the first wall 21 may be formed by stamping one sheet, and therefore, the first protruding portion 211 is formed on one side of the first wall 21 in the thickness direction, and the first groove 212 is formed on the other side.

In the above technical solution, the first wall 21 may be formed by stamping a plate-like structure, thereby facilitating processing and manufacture.

Referring to FIG. 2, in one or more optional embodiments, the first protruding portion 211 extends along a second direction Y. The second direction Y, the first direction X, and the thickness direction Z of the electrode assembly are perpendicular to each other.

The first protruding portion 211 extends along the second direction Y. That is, the length direction of the first protruding portion 211 is parallel to the second direction Y. The first protruding portion 211 is of a relatively long dimension in the second direction Y. The width direction of the first protruding portion 211 may be parallel to the first direction X.

In the above technical solution, the first protruding portion 211 possesses a relatively long dimension in the second direction Y, so that the first protruding portion 211 exerts a good effect of blocking the electrode assembly 10 in the first direction X.

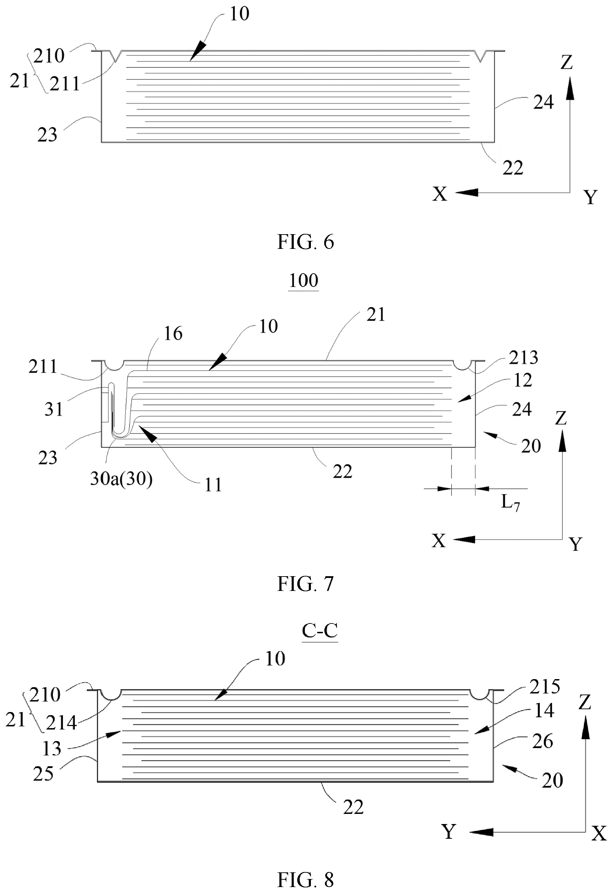

Referring to FIG. 3 and also referring to FIG. 5 and FIG. 6, FIG. 5 is a schematic structural diagram of a first protruding portion with a rectangular cross-section according to some embodiments of this application; and FIG. 6 is a schematic structural diagram of a first protruding portion with a conical cross-section according to some embodiments of this application. In one or more optional embodiments, the cross-section of the first protruding portion 211 is arc-shaped, rectangular, or conical, and the cross-section of the first protruding portion 211 is perpendicular to the second direction Y.

The cross-section of the first protruding portion 211 means a cross-section of the first protruding portion 211 sectioned by a plane perpendicular to the second direction Y.

When the cross-section of the first protruding portion 211 is arc-shaped, the arc protrudes toward the electrode assembly 10.

When the cross-section of the first protruding portion 211 is rectangular, the intersection between two adjacent surfaces may be arc-shaped, thereby facilitating processing and manufacture, and reducing damage to the electrode assembly 10.

In the above technical solution, the cross-section of the first protruding portion 211 is arc-shaped, rectangular, or conical, thereby facilitating processing and manufacture.

In some embodiments, the first wall 21 includes a first body 210 and a first protruding portion 211 that protrudes beyond the inner surface of the first body 210. The cross-section of the first protruding portion 211 includes an arc-shaped section and two rectilinear sections. The arc section is located between the two rectilinear sections. One end of each rectilinear section is connected to the first body 210, and the other end of each rectilinear section is connected to the arc-shaped section. The arc-shaped section is located at one end, away from the first body 210, of the first protruding portion 211.

Referring to FIG. 3 to FIG. 6, in one or more optional embodiments, the electrode assembly 10 includes a first end portion 11 in the first direction X. The shell 20 further includes a third wall 23 and a fourth wall 24 disposed opposite to each other along the first direction X. The third wall 23 is disposed opposite to the first end portion 11 in the first direction X. The third wall 23 is closer to the first end portion 11 than the fourth wall 24. Along the first direction X, at least a part of the first protruding portion 211 is located between the first end portion 11 and the third wall 23.

The third wall 23 and the fourth wall 24 are located between the first wall 21 and the second wall 22. The two ends of the third wall 23 in the thickness direction Z of the electrode assembly are connected to the first wall 21 and the second wall 22 respectively. The two ends of the fourth wall 24 in the thickness direction Z of the electrode assembly are connected to the first wall 21 and the second wall 22 respectively. The third wall 23, the fourth wall 24, the first wall 21, and the second wall 22 enclose an accommodation space for accommodating the electrode assembly 10.

Along the first direction X, a part of the first protruding portion 211 is located between the first end portion 11 and the third wall 23. A projection of another part of the first protruding portion 211 in the thickness direction Z of the electrode assembly overlaps a projection of the first end portion 11 in the thickness direction Z of the electrode assembly.

Along the first direction X, the first protruding portion 211 is entirely located between the first end portion 11 and the third wall 23. The projection of the first protruding portion 211 in the thickness direction Z of the electrode assembly does not overlap the projection of the first end portion 11 in the thickness direction Z of the electrode assembly.

In the above technical solution, along the first direction X, at least a part of the first protruding portion 211 is located between the first end portion 11 and the third wall 23. The first protruding portion 211 restricts the electrode assembly 10 from moving relative to the shell 20 toward the third wall 23, exerts a good effect of blocking the electrode assembly 10, disperses the force of the electrode assembly 10 generated by movement relative to the shell 20 toward the third wall 23, and reduces the impact of the movement of the electrode assembly 10 on the weak part of the shell 20.

Refer to FIG. 7, FIG. 7 is a cross-sectional view of a secondary battery according to some embodiments of this application. In one or more optional embodiments, the secondary battery 100 further includes a tab 30. The tab 30 is connected to the first end portion 11. The tab 30 extends out of the first end portion 11 along the first direction X.

The tab 30 is electrically connected to the electrode plate corresponding to the first end portion 11 to facilitate output of electrical energy from the electrode assembly 10. The tab 30 may include a positive tab and a negative tab 30a. The positive tab is electrically connected to the positive electrode plate 15 of the electrode assembly 10. The negative tab 30a is electrically connected to the negative electrode plate 16 of the electrode assembly 10. For example, the positive tab is welded to the positive current collector of the positive electrode plate 15, and the negative tab 30a is welded to the negative current collector of the negative electrode plate 16; or, the positive tab is riveted to the positive current collector, and the negative tab 30a is riveted to the negative current collector; or, the positive tab is bonded to the positive current collector by a conductive adhesive, and the negative tab 30a is bonded to the negative current collector by a conductive adhesive.

In some embodiments, the positive tab is connected by a positive electrode connection strap to a positive electrode terminal disposed on the shell 20; and the negative tab 30a is connected by a negative electrode connection strap 31 to a negative electrode terminal disposed on the shell 20, or the negative tab 30a is connected to the shell 20 by the negative electrode connection strap 31.

In the above technical solution, the tab is connected to the first end portion 11. An assembling space is reserved between the tab and the third wall 23. The first protruding portion 211 reasonably utilizes the assembling space inside the shell 20, and reduces the adverse effect on the energy density of the secondary battery 100.

Referring to FIG. 3, in one or more optional embodiments, along the first direction X, a minimum distance between the first protruding portion 211 and the inner surface of the third wall 23 is L₄, satisfying: 0.05 mm ≤ L₄ ≤ 1 mm.

The inner surface of the third wall 23 is a surface, oriented toward the electrode assembly 10, of the third wall 23.

The minimum distance between the first protruding portion 211 and the inner surface of the third wall 23 means a distance between one end of the first protruding portion 211, closest to the third wall 23 in the first direction X, and the inner surface of the third wall 23. When the first protruding portion 211 is parallel to the inner surface of the third wall 23, the distance between any position on the first protruding portion 211 and the inner surface of the third wall 23 is the minimum distance between the first protruding portion 211 and the inner surface of the third wall 23.

Optionally, L₄ may be, but is not limited to, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, or 1 mm.

In the above technical solution, the minimum distance between the first protruding portion 211 and the inner surface of the third wall 23 satisfies the above relationship. Therefore, on the one hand, when L₄ ≥ 0.05 mm, processing and manufacture are facilitated, thereby reducing the risk of interference between the first protruding portion 211 and the third wall 23. On the other hand, when L₄ ≤ 1 mm, the space occupied in the first direction X is relatively small, thereby reducing the adverse effect on the energy density of the secondary battery 100.

Referring to FIG. 3, in one or more optional embodiments, along the first direction X, a minimum distance between the first end portion 11 and the inner surface of the third wall 23 is L₅, satisfying: 0.17 mm ≤ L₅ ≤ 1.5 mm.

The electrode assembly 10 includes a positive electrode plate 15, a negative electrode plate 16, and a separator 17. The separator 17 is disposed between the positive electrode plate 15 and the negative electrode plate 16. In addition, in the thickness direction Z of the electrode assembly, the separator 17 is disposed at the end portion, close to the first wall 21 and the second wall 22, of the electrode assembly 10. Generally, in the first direction X, the negative electrode plate 16 exceeds the edge of the positive electrode plate 15. In order to avoid contact shorting between the positive electrode plate 15 and the negative electrode plate 16, the separator 17 exceeds the edge of the negative electrode plate 16 in the first direction X. Therefore, the first end portion 11 is the end, close to the third wall 23, of the separator 17 in the first direction X.

Optionally, L₅ may be, but is not limited to, 0.17 mm, 0.27 mm, 0.37 mm, 0.47 mm, 0.57 mm, 0.67 mm, 0.77 mm, 0.87 mm, 0.97 mm, 1.07 mm, 1.17 mm, 1.27 mm, 1.37 mm, 1.47 mm, or 1.5 mm.

In some embodiments, along the first direction X, the minimum distance between the negative electrode plate 16 and the inner surface of the third wall 23 is greater than or equal to 0.67 mm and less than or equal to 2 mm.

Optionally, along the first direction X, the minimum distance between the negative electrode plate 16 and the inner surface of the third wall 23 may be, but is not limited to, 0.67 mm, 0.77 mm, 0.87 mm, 0.97 mm, 1.07 mm, 1.17 mm, 1.27 mm, 1.37 mm, 1.47 mm, 1.57 mm, 1.67 mm, 1.77 mm, 1.87 mm, 1.97 mm, or 2 mm.

In the above technical solution, the minimum distance between the first end portion 11 and the inner surface of the third wall 23 satisfies the above relationship. Therefore, when L₅ ≥ 0.17 mm, on the one hand, an assembling space is reserved, thereby reducing the risk of contact shorting between the electrode assembly 10 and the third wall 23. On the other hand, when L₅ ≤ 1.5 mm, the space occupied in the first direction X is relatively small, thereby reducing the adverse effect on the energy density of the secondary battery 100.

Referring to FIG. 3, in one or more optional embodiments, along the first direction X, the minimum distance between the first end portion 11 and the inner surface of the third wall 23 is L₅, and the width of the first protruding portion 211 is L₆, satisfying: 0.4 ≤ L₆/L₅ < 1.

Optionally, L₆/L₅ may be, but is not limited to, 0.4, 0.5, 0.6, 0.7, 0.8, or 0.9.

In the above technical solution, the minimum distance between the first end portion 11 and the inner surface of the third wall 23 as well as the width of the first protruding portion satisfy the above relationship. Therefore, on the one hand, when L₆/L₅ ≥ 0.4, the first protruding portion 211 is relatively wide and facilitates processing and manufacture. On the other hand, when L₆/L₅ < 1, the first protruding portion 211 occupies just a relatively small space in the first direction X, thereby reducing the adverse effect on the energy density of the secondary battery 100. In addition, an assembling space is reserved, thereby reducing the interference between the first protruding portion 211 and the electrode assembly 10.

Referring to FIG. 3, in one or more optional embodiments, the first wall 21 is further provided with a second protruding portion 213 that protrudes toward the inside of the shell 20. The second protruding portion 213 and the first protruding portion 211 are spaced apart along the first direction X.

In an embodiment in which the first wall 21 includes the first body 210, the second protruding portion 213 protrudes beyond the inner surface of the first body 210. The structure of the second protruding portion 213 may be the same as or similar to that of the first protruding portion 211.

The second protruding portion 213 is disposed parallel to the first protruding portion 211. The second protruding portion 213 extends along the second direction Y.

The electrode assembly 10 further includes a second end portion 12 disposed opposite to the first end portion 11 in the first direction X. The fourth wall 24 is closer to the second end portion 12 than the third wall 23.

The second end portion 12 and the first end portion 11 are two ends of the electrode assembly 10 that are opposite to each other in the first direction X. The fourth wall 24 is closer to the second end portion 12 than the third wall 23. In other words, the second end portion 12 faces the fourth wall 24.

Along the first direction X, the projection of the second protruding portion 213 partially overlaps the projection of the electrode assembly 10. At least a part of the second protruding portion 213 is located between the second end portion 12 and the fourth wall 24.

In some embodiments, along the first direction X, a part of the second protruding portion 213 is located between the second end portion 12 and the fourth wall 24. The projection of another part of the second protruding portion 213 in the thickness direction Z of the electrode assembly overlaps the projection of the second end portion 12 in the thickness direction Z of the electrode assembly. Alternatively, along the first direction X, the second protruding portion 213 is entirely located between the second end portion 12 and the fourth wall 24. The projection of the second protruding portion 213 in the thickness direction Z of the electrode assembly does not overlap the projection of the second end portion 12 in the thickness direction Z of the electrode assembly.

In the above technical solution, the second protruding portion 213 coordinates with the first protruding portion 211 to block the two opposite ends of the electrode assembly 10 in the first direction X and restrict the electrode assembly 10 from moving relative to the shell 20 in the first direction X. At the same time, the first protruding portion and/or the second protruding portion 213 disperses the force generated by the movement of the electrode assembly 10 relative to the shell 20, so that the force does not directly impact the weakest weld region of the shell 20, thereby reducing the risk of weld cracking, endowing the secondary battery 100 with relatively high reliability, and improving the safety performance of the secondary battery 100.

In some embodiments, a second groove is formed on the outer surface of the first wall 21 at a position corresponding to the second protruding portion 213.

Referring to FIG. 3, in one or more optional embodiments, along the first direction X, the minimum distance between the second protruding portion 213 and the inner surface of the fourth wall 24 is L₇, satisfying: 0.05 mm ≤ L₇ ≤ 0.5 mm.

Optionally, L₇ may be, but is not limited to, 0.05 mm, 0.1 mm, 0.15 mm, 0.2 mm, 0.25 mm, 0.3 mm, 0.35 mm, 0.4 mm, 0.45 mm, or 0.5 mm.

In the above technical solution, the minimum distance between the second protruding portion 213 and the inner surface of the fourth wall 24 satisfies the above relationship. Therefore, on the one hand, when L₇ ≥ 0.05 mm, processing and manufacture are facilitated, thereby reducing the risk of interference between the second protruding portion 213 and the fourth wall 24. On the other hand, when L₇ ≤ 0.5 mm, the space occupied in the first direction X is reduced, thereby reducing the adverse effect on the energy density of the secondary battery 100.

Refer to FIG. 8, FIG. 8 is a cross-sectional view of sectioning along a C-C line shown in FIG. 2. In one or more optional embodiments, the first wall 21 is further provided with a third protruding portion 214 that protrudes toward the inside of the shell 20.

In an embodiment in which the first wall 21 includes the first body 210, the third protruding portion 214 protrudes beyond the inner surface of the first body 210. The structure of the third protruding portion 214 may be the same as or similar to that of the first protruding portion 211, but the third protruding portion 214 is disposed at a different position from the first protruding portion 211.

The shell 20 further includes a fifth wall 25. Two ends of the fifth wall 25 in the first direction X are connected to the third wall 23 and the fourth wall 24 respectively, and two ends of the fifth wall 25 in the thickness direction Z of the electrode assembly are connected to the first wall 21 and the second wall 22 respectively.

The fifth wall 25, the first wall 21, the second wall 22, the third wall 23, and the fourth wall 24 enclose an accommodation space for accommodating the electrode assembly 10.

In some embodiments, the fifth wall 25 may be perpendicular to the second direction Y.

The electrode assembly 10 further includes a third end portion 13 in a second direction Y. The second direction Y, the first direction X, and the thickness direction Z of the electrode assembly are perpendicular to each other. Along the second direction Y, at least a part of the third protruding portion 214 is located between the third end portion 13 and the fifth wall 25. Along the second direction Y, the projection of the third protruding portion 214 partially overlaps the projection of the electrode assembly 10.

The third end portion 13 is an end of the electrode assembly 10 in the second direction Y.

Along the second direction Y, a part of the third protruding portion 214 is located between the third end portion 13 and the fifth wall 25. The projection of another part of the third protruding portion 214 in the thickness direction Z of the electrode assembly overlaps the projection of the third end portion 13 in the thickness direction Z of the electrode assembly. Alternatively, along the second direction Y, the third protruding portion 214 is entirely located between the third end portion 13 and the fifth wall 25. The projection of the third protruding portion 214 in the thickness direction Z of the electrode assembly does not overlap the projection of the third end portion 13 in the thickness direction Z of the electrode assembly.

In the above technical solution, with the third protruding portion 214 disposed, when the electrode assembly 10 moves relative to the shell 20 along the second direction Y, the third protruding portion 214 can contact the electrode assembly 10 to block the electrode assembly 10 from moving relative to the shell 20. At the same time, the third protruding portion disperses the force generated by the movement of the electrode assembly 10 relative to the shell 20, so that the force does not directly impact the weakest weld region of the shell 20, thereby reducing the risk of weld cracking, endowing the secondary battery 100 with relatively high reliability, and improving the safety performance of the secondary battery 100.

In some embodiments, a third groove is formed on the outer surface of the first wall 21 at a position corresponding to the third protruding portion 214.

Referring to FIG. 2, in one or more optional embodiments, the third protruding portion 214 extends along the first direction X. One end, close to the first protruding portion 211, of the third protruding portion 214 is spaced apart from the first protruding portion 211.

The third protruding portion 214 extends along the first direction X. The length direction of the third protruding portion 214 is parallel to the first direction X.

In the first direction X, one end, close to the first protruding portion 211, of the third protruding portion 214 is spaced apart from the first protruding portion 211. Along the thickness direction Z of the electrode assembly, the projection of the third protruding portion 214 does not overlap the projection of the first protruding portion 211.

In the above technical solution, the third protruding portion 214 possesses a relatively long dimension in the first direction X, so that the third protruding portion 214 exerts a good effect of blocking the electrode assembly 10 in the second direction Y.

In some embodiments, along the first direction X, the length of the third protruding portion 214 is greater than or equal to 0.6 times the distance between the inner surface of the third wall 23 and the inner surface of the fourth wall 24, and less than or equal to 0.9 times the distance between the inner surface of the third wall 23 and the inner surface of the fourth wall 24.

Referring to FIG. 2, in one or more optional embodiments, along the first direction X, the distance between the inner surface of the third wall 23 and the inner surface of the fourth wall 24 is L₈. The length of the third protruding portion 214 is L₉, satisfying: 0.6L₈ ≤ L₉ ≤ 0.9L₈.

Optionally, L₉ may be, but is not limited to, 0.6L₈, 0.65L₈, 0.7L₈, 0.75L₈, 0.8L₈, 0.85L₈ or 0.9L₈.

In the above technical solution, the length of the third protruding portion 214 as well as the distance between the inner surface of the third wall 23 and the inner surface of the fourth wall 24 satisfy the above relationship. Therefore, on the one hand, when L₉ ≥ 0.6L₈, and when the electrode assembly 10 moves relative to the shell 20 along the second direction Y, the third protruding portion 214 can contact the electrode assembly 10 on a relatively large contact area, and the third protruding portion 214 exerts a good effect of blocking the electrode assembly 10. On the other hand, when L₉ ≤ 0.9L₈, the processing and manufacturing of the third protruding portion 214 are facilitated, thereby reducing the risk of interference between the third protruding portion 214 and the third wall 23 or the fourth wall 24.

Referring to FIG. 2, FIG. 3, and FIG. 8, in one or more optional embodiments, the first wall 21 is further provided with a second protruding portion 213, a third protruding portion 214, and a fourth protruding portion 215 that protrude toward the inside of the shell 20. The second protruding portion 213 and the first protruding portion 211 are spaced apart along the first direction X. The third protruding portion 214 is spaced apart from the fourth protruding portion 215 along the second direction Y. The second direction Y, the first direction X, and the thickness direction Z of the electrode assembly are perpendicular to each other;

The electrode assembly 10 further includes a second end portion 12, a third end portion 13, and a fourth end portion 14. The second end portion 12 is disposed opposite to the first end portion 11 along the first direction X. The third end portion 13 is disposed opposite to the fourth end portion 14 along the second direction Y. The fourth wall 24 is closer to the second end portion 12 than the third wall 23.

The shell 20 further includes a fifth wall 25 and a sixth wall 26 disposed opposite to each other along the second direction Y. The fifth wall 25 is closer to the third end portion 13 than the sixth wall 26. The sixth wall 26 is closer to the fourth end portion 14 than the fifth wall 25.

Along the first direction X, the projection of the second protruding portion 213 partially overlaps the projection of the electrode assembly 10. At least a part of the second protruding portion 213 is located between the second end portion 12 and the fourth wall 24.

Along the second direction Y, the projection of the third protruding portion 214 partially overlaps the projection of the electrode assembly 10. At least a part of the third protruding portion 214 is located between the third end portion 13 and the fifth wall 25. The projection of the fourth protruding portion 215 partially overlaps the projection of the electrode assembly 10. At least a part of the fourth protruding portion 215 is located between the fourth end portion 14 and the sixth wall 26.

In some embodiments, along the thickness direction Z of the electrode assembly, the projection of the first protruding portion 211, the projection of the second protruding portion 213, the projection of the third protruding portion 214, and the projection of the fourth protruding portion 215 do not overlap each other, thereby facilitating processing and manufacture.

In the above technical solution, the second protruding portion 213 coordinates with the first protruding portion 211 to block the two opposite ends of the electrode assembly 10 in the first direction X and restrict the electrode assembly 10 from moving relative to the shell 20 in the first direction X. The third protruding portion 214 coordinates with the fourth protruding portion 215 to block the two opposite ends of the electrode assembly 10 in the second direction Y and restrict the electrode assembly 10 from moving relative to the shell 20 in the second direction Y. At the same time, the first protruding portion 211, the second protruding portion 213, the third protruding portion 214, and the fourth protruding portion 215 disperse the force generated by the movement of the electrode assembly 10 relative to the shell 20 in a plane perpendicular to the thickness direction Z of the electrode assembly, so that the force does not directly impact the weakest weld region of the shell 20, thereby further endowing the secondary battery 100 with relatively high reliability, and improving the safety performance of the secondary battery 100.

In some embodiments, a fourth groove is formed on the outer surface of the first wall 21 at a position corresponding to the fourth protruding portion 215.

Referring to FIG. 2, in one or more optional embodiments, the shell 20 further includes a fifth wall 25 and a sixth wall 26 disposed opposite to each other along the second direction Y. The second direction Y, the first direction X, and the thickness direction Z of the electrode assembly are perpendicular to each other.

The electrode assembly 10 is located between the fifth wall 25 and the sixth wall 26. The fifth wall 25, the sixth wall 26, the first wall 21, the second wall 22, the third wall 23, and the fourth wall 24 enclose an accommodation space for accommodating the electrode assembly 10.

Along the second direction Y, the distance between the inner surface of the fifth wall 25 and the inner surface of the sixth wall 26 is L₁₀, satisfying at least one of the following conditions: (1) along the second direction Y, the length of the first protruding portion 211 is L₁₁, satisfying: 0.6L₁₀ ≤ L₁₁ ≤ 0.9L₁₀; or (2) along the second direction Y, a minimum distance between the first protruding portion 211 and the inner surface of the fifth wall 25 is L₁₂, satisfying: 2 mm ≤ L₁₂ ≤ 0.2L₁₀.

The inner surface of the sixth wall 26 is a surface, oriented toward the electrode assembly 10, of the sixth wall 26.

Optionally, L₁₁ may be, but is not limited to, 0.6L₁₀, 0.65L₁₀, 0.7L₁₀, 0.75L₁₀, 0.8L₁₀, 0.85L₁₀, or 0.9L₁₀.

Optionally, L₁₂ may be, but is not limited to, 2 mm, 2.5 mm, 0.05L₁₀, 0.1L₁₀, 0.15L₁₀, or 0.2L₁₀.

In the above technical solution, in a case that the length of the first protruding portion 211 as well as the distance between the inner surface of the fifth wall 25 and the inner surface of the sixth wall 26 satisfy the above relationship (0.6L₁₀ ≤ L₁₁ ≤ 0.9L₁₀), on the one hand, when L₁₁ ≥ 0.6L₁₀, and when the electrode assembly 10 moves relative to the shell 20 along the first direction X, the first protruding portion 211 can contact the electrode assembly 10 on a relatively large contact area, and the first protruding portion 211 exerts a good effect of blocking the electrode assembly 10. On the other hand, when L₁₁ ≤ 0.9L₁₀, the processing and manufacturing of the first protruding portion 211 are facilitated, thereby reducing the risk of interference between the first protruding portion 211 and the fifth wall 25 or the sixth wall 26. When the minimum distance between the first protruding portion 211 and the inner surface of the fifth wall 25 as well as the distance between the inner surface of the fifth wall 25 and the inner surface of the sixth wall 26 satisfy the above relationship (2 mm ≤ L₁₂ ≤ 0.2L₁₀), on the one hand, when L₁₂ ≥ 2 mm, the risk of interference between the first protruding portion 211 and the fifth wall 25 is reduced. On the other hand, when L₁₂ ≤ 0.2L₁₀, the distance between the first protruding portion 211 and the inner surface of the fifth wall 25 is relatively small, thereby reducing the space waste in the second direction Y and reducing the adverse effect on the energy density of the secondary battery 100.

In some embodiments, along the second direction Y, the length of the second protruding portion 213 is greater than or equal to 0.6 times the distance between the inner surface of the fifth wall 25 and the inner surface of the sixth wall 26, and less than or equal to 0.9 times the distance between the inner surface of the fifth wall 25 and the inner surface of the sixth wall 26.

Referring to FIG. 1 and FIG. 3, in one or more optional embodiments, the shell 20 includes a housing 27 and a cover 28. The housing 27 is provided with an opening. The cover 28 closes the opening. The first wall 21 is the cover 28.

The second wall 22, the third wall 23, the fourth wall 24, the fifth wall 25, and the sixth wall 26 forms a shell 27 by enclosure.

In the above technical solution, the first wall 21 is a cover 28, thereby facilitating the processing and manufacture of the first protruding portion 211, and facilitating the assembling of the electrode assembly 10 to the shell 20.

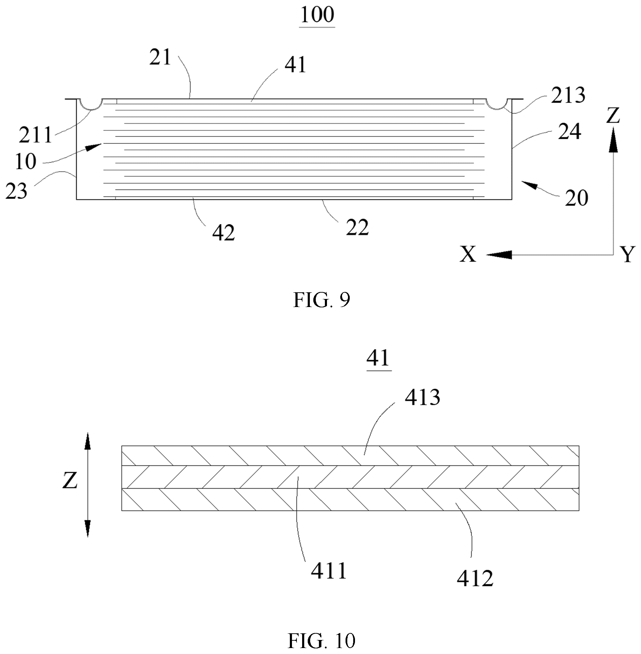

Referring to FIG. 9 and FIG. 10, FIG. 9 is a schematic diagram of assembling a first bonding piece, a first wall, and an electrode assembly according to some embodiments of this application; and FIG. 10 is a schematic structural diagram of a first bonding piece according to some embodiments of this application. In one or more optional embodiments, the secondary battery 100 further includes a first bonding piece 41. The first bonding piece 41 bonds the first wall 21 to the electrode assembly 10.

In the above technical solution, the first bonding piece 41 bonds the first wall 21 to the electrode assembly 10, thereby restricting the electrode assembly 10 from moving relative to the first wall 21, and reducing the risk of impact of the electrode assembly 10 on the weld of the shell 20.

The first bonding piece 41 includes a first substrate layer 411 as well as a first bonding layer 412 and a second bonding layer 413 that are disposed on two sides of the first substrate layer 411 in the thickness direction. The first bonding layer 412 is bonded to the electrode assembly 10, and the second bonding layer 413 is bonded to the first wall 21. The thickness direction of the first substrate layer 411 is parallel to the thickness direction Z of the electrode assembly.

The material of the first bonding layer 412 includes at least one of polyethylene oxide, poly(acrylonitrile-co-styrene-co-butadiene), poly(styrene-co-butadiene), polyvinyl alcohol, polyvinyl methyl ether, polyvinyl ethyl ether, polyvinylidene fluoride, polytetrafluoroethylene, polyhexafluoropropylene, polyacrylic acid, polymethyl methacrylate, polypropylene, polyethylene, or polyamide.

The material of the second bonding layer 413 includes at least one of polymethyl methacrylate, polyacrylic acid, polyacrylate salt, polyacrylonitrile, polyvinyl pyrrolidone, polyvinyl acetate, poly(styrene-b-isoprene-b-styrene), poly(ethylene-co-vinyl acetate), or polyimide.

The material of the first substrate layer 411 includes at least one of polyethylene, polypropylene, polyethylene terephthalate, or polyimide.

In one or more optional embodiments, the secondary battery 100 further includes a second bonding piece 42. The second bonding piece 42 bonds the second wall 22 to the electrode assembly 10.

In the above technical solution, the second bonding piece 42 bonds the second wall 22 to the electrode assembly 10, thereby restricting the electrode assembly 10 from moving relative to the second wall 22, and reducing the risk of impact of the electrode assembly 10 on the weld of the shell 20.

The second bonding piece 42 includes a second substrate layer as well as a third bonding layer and a fourth bonding layer that are disposed on two sides of the second substrate layer in the thickness direction. The third bonding layer is bonded to the electrode assembly 10, and the fourth bonding layer is bonded to the second wall 22. The thickness direction of the second substrate layer is parallel to the thickness direction Z of the electrode assembly.

The material of the third bonding layer is the same as the material of the first bonding layer 412. The material of the fourth bonding layer is the same as the material of the second bonding layer 413. The material of the second substrate layer is the same as the material of the first substrate layer 411.

According to some embodiments of this application, this application further provides an electrochemical device. The electrochemical device contains the secondary battery 100 provided in any one of the above embodiments.

According to some embodiments of this application, this application further provides an electrical device. The electrical device contains the electrochemical device provided in any one of the above embodiments.

The following describes specific embodiments.

### Embodiment 1

A secondary battery 100 is assembled in the following process:
(1) Preparing a negative electrode plate: Mixing artificial graphite as a negative active material, conductive carbon black (Super P), and the styrene butadiene rubber (SBR) at a weight ratio of 96 : 1.5 : 2.5, adding deionized water as a solvent, blending the mixture into a slurry in which the mass percent of the solid is 70 wt%, and stirring well. Coating one surface of a 10 µm-thick negative current collector copper foil with the slurry evenly, reserving a blank foil region at the edge of the copper foil, and drying the slurry at a temperature of 110 °C to obtain a negative electrode plate coated with a 150 µm-thick negative active material layer on one side. Repeating the foregoing steps on the other surface of the negative electrode plate to obtain a negative electrode plate coated with the negative active material layer on both sides. Subsequently, cutting away the excess blank foil region by a laser die-cutting process, so as to obtain a negative tab.
(2) Preparing a positive electrode plate: Mixing lithium cobalt oxide (LiCoO₂) as a positive active material, conductive carbon black (super P), and polyvinylidene difluoride (PVDF) at a weight ratio of 97.5: 1.0: 1.5, and adding N-methyl pyrrolidone (NMP) as a solvent to form a slurry in which a solid content is 75 wt%, and stirring well. Coating one surface of a 12 µm-thick positive current collector aluminum foil evenly with the slurry, reserving a blank foil region at the edge of the aluminum foil, and then drying the slurry at a temperature of 90 °C to obtain a positive electrode plate coated with a 100 µm-thick positive active material layer. Repeating the above coating steps on the other surface of the aluminum foil to prepare another first electrode plate coated with the active material layer on both sides. Subsequently, cutting away the excess blank foil region by a laser die-cutting process, so as to obtain a positive tab.
(3) Preparing an electrolyte solution: Mixing ethylene carbonate (EC), ethyl methyl carbonate (EMC), and diethyl carbonate (DEC) at a weight ratio of EC: EMC: DEC = 30: 50: 20 in an dry argon atmosphere to form a base organic solvent, then adding lithium salt hexafluorophosphate (LiPF₆) into the base organic solvent to dissolve, and mixing the solution evenly to obtain an electrolyte solution in which a lithium salt concentration is 1.15 mol/L.
(4) Preparing a separator: Using a three-layer separator, where the separator includes a first adhesive layer, a first substrate layer, and a first adhesive layer stacked in layers. The first substrate layer is made of polyethylene (PE). The first adhesive layer contains a first binder. The first adhesive layer further contains inorganic ceramic particles Al₂O₃.
(5) Preparing an electrode assembly 10: Stacking the positive electrode plate, the separator, and the negative electrode plate, and using a flat plate to hot-press the stacked structure for 10 seconds at a temperature of 80 °C and a pressure of 1.5 MPa to form an electrode assembly 10 for future use.
(6) Assembling the electrode assembly 10: Putting a stainless steel housing with a stamped pocket into an assembly jig, and leaving the pocket side to face upward. Putting the electrode assembly 10 into the pocket, and then fitting a cover onto the electrode assembly 10, with a first protruding portion stamped on the cover. Welding the edges of the cover and the housing hermetically by using a laser beam. The length of the secondary battery is 89.15 mm, the width of the secondary battery is 63.15 mm, and the thickness of the secondary battery is 8.49 mm. The length of the electrode assembly is 86.2 mm, the width of the electrode assembly is 60.2 mm, and the thickness L₂ of the electrode assembly is 8.2 mm. The pocket length of the stainless steel housing is 89 mm, the pocket width is 63 mm, and the pocket depth is 8.34 mm.
   The length L₁₁ of the first protruding portion is 43.5 mm, the width L₆ of the first protruding portion is 0.45 mm, and the height L₃ of the first protruding portion is 1.53 mm. Along the first direction, the minimum distance L₄ between the first protruding portion and the inner surface of the third wall is 0.07 mm, and the minimum distance L₅ between the first end portion and the inner surface of the third wall is 1.4 mm. The L₆/L₅ ratio is 0.32. Along the thickness direction of the electrode assembly, the dimension L₁ of the inner surface of the third wall is 8.34 mm. Along the second direction, the distance L₁₀ between the inner surface of the fifth wall and the inner surface of the sixth wall is 63 mm. The L₁₁/L₁₀ ratio is 0.9.
(7) Electrolyte injection and sealing: Injecting an electrolyte solution into the assembled electrode assembly 10, and performing steps such as vacuum sealing, static standing, hot-pressing, chemical formation, and shaping to obtain a secondary battery 100.

### Comparative Embodiment 1

This comparative embodiment differs from Embodiment 1 in that the cover (first wall) is not provided with the first protruding portion.

### Comparative Embodiment 2

This comparative embodiment differs from Embodiment 1 in that the height L₃ of the first protruding portion is 0.13 mm.

### Embodiments 2 to 8

These embodiments differ from Embodiment 1 in the width L₆ of the first protruding portion.

### Embodiments 9 to 13

These embodiments differ from Embodiment 1 in the minimum distance L₄ between the first protruding portion and the inner surface of the third wall.

### Embodiments 14 to 21

These embodiments differ from Embodiment 1 in that the height L₃ of the first protruding portion is different and the width L₃ of the first protruding portion is 1.2 mm.

### Embodiments 22 to 27

These embodiments differ from Embodiment 1 in the length L₁₁ of the first protruding portion.

### Embodiments 28 to 35

These embodiments differ from Embodiment 1 in that the cover is further provided with a second protruding portion.

A drop test is performed on the secondary batteries prepared in the comparative embodiments and the embodiments, and the test results are shown in Table 1.

The drop test method for secondary batteries is as follows: Pre-treating a secondary battery at 25 °C, leaving the secondary battery to stand for 60 minutes at normal temperature, and then measuring the voltage of the secondary battery before the drop test. Fixing the secondary battery into a jig, dropping the battery downward freely from a height of 1.5 m by using a drop tester, and letting the following six parts of the battery hit the landing point in sequence: head, tail, right head corner, right tail corner, left head corner, and left tail corner (angle: 45±15°), thereby completing one round. Repeating the above operations for 6 rounds. Measuring and recording the voltage of the secondary battery after completion of the dropping, and checking the appearance of the secondary battery and taking photos before and after the dropping. Evaluation criteria: The test is passed if no smoke or electrolyte leak occurs and the voltage drop is less than 30 mV. The drop test pass rate is a proportion of the number of secondary batteries passing the test to 100 secondary batteries tested in total.

**Table 1**

| | L₃ | L₄ | L₅ | L₆ | L₆/L₅ | L₁ | L₂ | L₁₀ | L₁₁ | L₁₁/L₁₀ | L₇ | Drop test pass rate |
|---|---|---|---|---|---|---|---|---|---|---|---|---|
| Comparative Embodiment 1 | 0 | / | 1.4 | / | / | 8.34 | 8.2 | 63 | / | / | / | 10% |
| Comparative Embodiment 2 | 0.13 | 0.07 | 1.4 | 1.2 | 0.86 | 8.34 | 8.2 | 63 | 43.5 | 0.69 | / | 17% |
| Embodiment 1 | 1.53 | 0.07 | 1.4 | 1.2 | 0.86 | 8.34 | 8.2 | 63 | 43.5 | 0.69 | / | 70% |
| Embodiment 2 | 1.53 | 0.07 | 1.4 | 0.45 | 0.32 | 8.34 | 8.2 | 63 | 43.5 | 0.69 | / | 37% |
| Embodiment 3 | 1.53 | 0.07 | 1.4 | 0.5 | 0.36 | 8.34 | 8.2 | 63 | 43.5 | 0.69 | / | 43% |
| Embodiment 4 | 1.53 | 0.07 | 1.4 | 0.56 | 0.40 | 8.34 | 8.2 | 63 | 43.5 | 0.69 | / | 59% |
| Embodiment 5 | 1.53 | 0.07 | 1.4 | 0.86 | 0.61 | 8.34 | 8.2 | 63 | 43.5 | 0.69 | / | 63% |
| Embodiment 6 | 1.53 | 0.07 | 1.4 | 0.98 | 0.70 | 8.34 | 8.2 | 63 | 43.5 | 0.69 | / | 65% |
| Embodiment 7 | 1.53 | 0.07 | 1.4 | 1.4 | 1.00 | 8.34 | 8.2 | 63 | 43.5 | 0.69 | / | 63% |
| Embodiment 8 | 1.53 | 0.07 | 1.4 | 1.5 | 1.07 | 8.34 | 8.2 | 63 | 43.5 | 0.69 | / | 30% |
| Embodiment 9 | 1.53 | 0.04 | 1.4 | 1.2 | 0.86 | 8.34 | 8.2 | 63 | 43.5 | 0.69 | / | 23% |
| Embodiment 10 | 1.53 | 0.05 | 1.4 | 1.2 | 0.86 | 8.34 | 8.2 | 63 | 43.5 | 0.69 | / | 64% |
| Embodiment 11 | 1.53 | 0.09 | 1.4 | 1.2 | 0.86 | 8.34 | 8.2 | 63 | 43.5 | 0.69 | / | 55% |
| Embodiment 12 | 1.53 | 1 | 1.4 | 1.2 | 0.86 | 8.34 | 8.2 | 63 | 43.5 | 0.69 | / | 56% |
| Embodiment 13 | 1.53 | 1.2 | 1.4 | 1.2 | 0.86 | 8.34 | 8.2 | 63 | 43.5 | 0.69 | / | 40% |
| Embodiment 14 | 0.14 | 0.07 | 1.4 | 1.2 | 0.86 | 8.34 | 8.2 | 63 | 43.5 | 0.69 | / | 37% |
| Embodiment 15 | 0.44 | 0.07 | 1.4 | 1.2 | 0.86 | 8.34 | 8.2 | 63 | 43.5 | 0.69 | / | 43% |
| Embodiment 16 | 0.74 | 0.07 | 1.4 | 1.2 | 0.86 | 8.34 | 8.2 | 63 | 43.5 | 0.69 | / | 55% |
| Embodiment 17 | 1.24 | 0.07 | 1.4 | 1.2 | 0.86 | 8.34 | 8.2 | 63 | 43.5 | 0.69 | / | 60% |
| Embodiment 18 | 1.95 | 0.07 | 1.4 | 1.2 | 0.86 | 8.34 | 8.2 | 63 | 43.5 | 0.69 | / | 68% |
| Embodiment 19 | 2.34 | 0.07 | 1.4 | 1.2 | 0.86 | 8.34 | 8.2 | 63 | 43.5 | 0.69 | / | 63% |
| Embodiment 20 | 2.73 | 0.07 | 1.4 | 1.2 | 0.86 | 8.34 | 8.2 | 63 | 43.5 | 0.69 | / | 60% |
| Embodiment 21 | 2.81 | 0.07 | 1.4 | 1.2 | 0.86 | 8.34 | 8.2 | 63 | 43.5 | 0.69 | / | 23% |
| Embodiment 22 | 1.53 | 0.07 | 1.4 | 1.2 | 0.86 | 8.34 | 8.2 | 63 | 36.2 | 0.57 | / | 43% |
| Embodiment 23 | 1.53 | 0.07 | 1.4 | 1.2 | 0.86 | 8.34 | 8.2 | 63 | 37.8 | 0.60 | / | 57% |
| Embodiment 24 | 1.53 | 0.07 | 1.4 | 1.2 | 0.86 | 8.34 | 8.2 | 63 | 49.5 | 0.79 | / | 53% |
| Embodiment 25 | 1.53 | 0.07 | 1.4 | 1.2 | 0.86 | 8.34 | 8.2 | 63 | 52.4 | 0.83 | / | 66% |
| Embodiment 26 | 1.53 | 0.07 | 1.4 | 1.2 | 0.86 | 8.34 | 8.2 | 63 | 56.7 | 0.90 | / | 70% |
| Embodiment 27 | 1.53 | 0.07 | 1.4 | 1.2 | 0.86 | 8.34 | 8.2 | 63 | 57.8 | 0.92 | / | 32% |
| Embodiment 28 | 1.53 | 0.07 | 1.4 | 1.2 | 0.86 | 8.34 | 8.2 | 63 | 43.5 | 0.69 | 0.04 | 54% |
| Embodiment 29 | 1.53 | 0.07 | 1.4 | 1.2 | 0.86 | 8.34 | 8.2 | 63 | 43.5 | 0.69 | 0.05 | 71% |
| Embodiment 30 | 1.53 | 0.07 | 1.4 | 1.2 | 0.86 | 8.34 | 8.2 | 63 | 43.5 | 0.69 | 0.1 | 75% |
| Embodiment 31 | 1.53 | 0.07 | 1.4 | 1.2 | 0.86 | 8.34 | 8.2 | 63 | 43.5 | 0.69 | 0.2 | 78% |
| Embodiment 32 | 1.53 | 0.07 | 1.4 | 1.2 | 0.86 | 8.34 | 8.2 | 63 | 43.5 | 0.69 | 0.3 | 76% |
| Embodiment 33 | 1.53 | 0.07 | 1.4 | 1.2 | 0.86 | 8.34 | 8.2 | 63 | 43.5 | 0.69 | 0.4 | 78% |
| Embodiment 34 | 1.53 | 0.07 | 1.4 | 1.2 | 0.86 | 8.34 | 8.2 | 63 | 43.5 | 0.69 | 0.5 | 80% |
| Embodiment 35 | 1.53 | 0.07 | 1.4 | 1.2 | 0.86 | 8.34 | 8.2 | 63 | 43.5 | 0.69 | 0.55 | 79% |

As can be seen from Comparative Embodiments 1 to 2 versus Embodiments 1 to 35, with other parameters being the same, in Comparative Embodiment 1, the cover (first wall) is not provided with the first protruding portion, and the height of the first protruding portion is 0; in Comparative Embodiment 2, L₃ < L₁ - L₂, and the drop test pass rate in Comparative Embodiments 1 and 2 is relatively low. In Embodiments 1 to 35, L₃ ≥ L₁ - L₂, and the drop test pass rate is relatively high.

As can be seen from comparison of Embodiments 1 to 8, with other parameters being the same, in Embodiment 1 and Embodiments 4 to 7, 0.4 ≤ L₆/L₅ < 1, and the drop test pass rate is relatively high; in Embodiments 2 and 3, L₆/L₅ < 0.4, and the drop test pass rate is relatively low; in Embodiment 8, L₆/L₅ > 1, the width of the first protruding portion exceeds the minimum distance between the first end portion and the inner surface of the third wall, so that the first protruding portion interferes with the weld between the third wall and the first wall, resulting in a relatively low drop test pass rate.

As can be seen from Embodiment 1 versus Embodiments 9 to 13, with other parameters being the same, in Embodiment 1 and Embodiments 10 to 12, 0.05 mm ≤ L₄ ≤ 1 mm, so that the drop test pass rate is relatively high; in Embodiment 9, L₄ < 0.05 mm, the distance between the first protruding portion and the inner surface of the third wall is relatively short, the sealing of the shell is inconvenient, a new weak point is formed, and therefore, the drop test pass rate is relatively low; in Embodiment 13, L4 > 1 mm, the distance between the first protruding portion and the inner surface of the third wall is relatively long, thereby adversely affecting the performance of the battery cell, and resulting in a relatively low drop test pass rate.

As can be seen from Embodiment 1 versus Embodiments 14 to 21, with other parameters being the same, in Embodiment 1 and Embodiments 14 to 20, (0.14 mm) L₂ - L1 ≤ L₃ ≤ L₂/3 (2.73 mm), so that the drop test pass rate is relatively high; in Embodiment 21, L₃ > L₂/3 (2.73 mm), the height of the first protruding portion is excessive, thereby decreasing the strength of the cover and resulting in a relatively low drop test pass rate.

As can be seen from Embodiment 1 versus Embodiments 22 to 27, with other parameters being the same, in Embodiment 1 and Embodiments 23 to 26, 0.6 ≤ L₁₁/L₁₀ ≤ 0.9, so that the drop test pass rate is relatively high; in Embodiment 22, L₁₁/L₁₀ < 0.6, the length of the first protruding portion is relatively small, and the effect of the first protruding portion in blocking the electrode assembly is insufficient, so that the drop test pass rate is relatively low; in Embodiment 27, L₁₁/L₁₀ > 0.9, the length of the first protruding portion is relatively large and affects the length of the weld, so that the drop test pass rate is relatively low.

As can be seen from Embodiment 1 versus Embodiments 29 to 35, with other parameters being the same, in Embodiments 29 to 35, a second protruding portion is added, thereby increasing the drop test pass rate. As can be seen from Embodiment 1 versus Embodiment 28, although a second protruding portion is added, the minimum distance L₇ between the second protruding portion and the fourth wall is less than 0.05 mm, giving rise to a new weak point, and resulting in a relatively low drop test pass rate. In Embodiments 29 to 24, 0.05 mm ≤ L₇ ≤ 0.5 mm, so that the drop test pass rate is high, and the performance of the secondary battery is less affected. In Embodiment 35, L₇ > 0.5 mm, so that the second protruding portion abuts the electrode plate of the electrode assembly, thereby adversely affecting the performance of the secondary battery.

Although this application has been described with reference to preferred embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A secondary battery, **characterized in that** the secondary battery comprises:
an electrode assembly; and
a shell, configured to accommodate the electrode assembly, wherein the shell comprises a first wall and a second wall opposite to each other along a thickness direction of the electrode assembly,
wherein the first wall is provided with a first protruding portion that protrudes toward an inside of the shell, and the shell further comprises a third wall, the third wall connects the first wall and the second wall, the third wall is spaced apart from the electrode assembly along a first direction, and the first direction is perpendicular to a thickness direction of the electrode assembly; and
along the thickness direction of the electrode assembly, a dimension of an inner surface of the third wall is L₁, a thickness of the electrode assembly is L₂, and a height by which the first protruding portion protrudes beyond an inner surface of the first wall is L₃, satisfying: L₃ ≥ L₁ - L₂.

2. The secondary battery according to claim 1, **characterized in that** L₃ ≤ L₂/3.

3. The secondary battery according to claim 1, **characterized in that** the first protruding portion contacts a first end portion of the electrode assembly in the first direction.

4. The secondary battery according to claim 1, **characterized in that** a first groove is formed on an outer surface of the first wall at a position corresponding to the first protruding portion.

5. The secondary battery according to claim 1, **characterized in that** the first protruding portion extends along a second direction, and the second direction, the first direction, and the thickness direction of the electrode assembly are perpendicular to each other.

6. The secondary battery according to claim 5, **characterized in that** a cross-section of the first protruding portion is arc-shaped, rectangular, or conical, and the cross-section of the first protruding portion is perpendicular to the second direction.

7. The secondary battery according to claim 1, **characterized in that** the electrode assembly comprises a first end portion in the first direction, the shell further comprises a fourth wall, the third wall and the fourth wall are disposed opposite to each other along the first direction, the third wall is disposed opposite to the first end portion in the first direction, the third wall is closer to the first end portion than the fourth wall, and along the first direction, at least a part of the first protruding portion is located between the first end portion and the third wall.

8. The secondary battery according to claim 7, **characterized in that** the secondary battery further comprises a tab, the tab is connected to the first end portion, and the tab extends out of the first end portion along the first direction; and along the first direction, a minimum distance between the first protruding portion and the inner surface of the third wall is L₄, satisfying: 0.05 mm ≤ L₄ ≤ 1 mm.

9. The secondary battery according to claim 8, **characterized in that**, along the first direction, a minimum distance between the first end portion and the inner surface of the third wall is L₅, satisfying: 0.17 mm ≤ L₅ ≤ 1.5 mm; and a width of the first protruding portion is L₆, satisfying: 0.4 ≤ L₆/L₅ < 1.

10. The secondary battery according to claim 7, **characterized in that** the first wall is further provided with a second protruding portion that protrudes toward the inside of the shell, and the second protruding portion is spaced apart from the first protruding portion along the first direction;
the electrode assembly further comprises a second end portion disposed opposite to the first end portion in the first direction, the fourth wall is closer to the second end portion than the third wall, and along the first direction, a projection of the second protruding portion partially overlaps a projection of the electrode assembly, and at least a part of the second protruding portion is located between the second end portion and the fourth wall; and
along the first direction, a minimum distance between the second protruding portion and an inner surface of the fourth wall is L₇, satisfying: 0.05 mm ≤ L₇ ≤ 0.5 mm.

11. The secondary battery according to claim 7, **characterized in that** the first wall is further provided with a third protruding portion that protrudes toward the inside of the shell;
the shell further comprises a fifth wall, two ends of the fifth wall in the first direction are connected to the third wall and the fourth wall respectively, and two ends of the fifth wall in the thickness direction of the electrode assembly are connected to the first wall and the second wall respectively;
the electrode assembly further comprises a third end portion in a second direction, the second direction, the first direction, and the thickness direction of the electrode assembly are perpendicular to each other, and along the second direction, at least a part of the third protruding portion is located between the third end portion and the fifth wall;
along the second direction, a projection of the third protruding portion partially overlaps a projection of the electrode assembly;
the third protruding portion extends along the first direction, and one end, close to the first protruding portion, of the third protruding portion is spaced apart from the first protruding portion; and
along the first direction, a distance between the inner surface of the third wall and an inner surface of the fourth wall is L₈, and a length of the third protruding portion is L₉, satisfying: 0.6L₈ ≤ L₉ ≤ 0.9L₈.

12. The secondary battery according to claim 7, **characterized in that** the first wall is further provided with a second protruding portion, a third protruding portion, and a fourth protruding portion that protrude toward the inside of the shell, the second protruding portion is spaced apart from the first protruding portion along the first direction, the third protruding portion is spaced apart from the fourth protruding portion along a second direction, and the second direction, the first direction, and the thickness direction of the electrode assembly are perpendicular to each other;
the electrode assembly further comprises a second end portion, a third end portion, and a fourth end portion; the second end portion is disposed opposite to the first end portion along the first direction; the third end portion is disposed opposite to the fourth end portion along the second direction; the fourth wall is closer to the second end portion than the third wall; the shell further comprises a fifth wall and a sixth wall disposed opposite to each other along the second direction; the fifth wall is closer to the third end portion than the sixth wall; and the sixth wall is closer to the fourth end portion than the fifth wall;
along the first direction, a projection of the second protruding portion partially overlaps a projection of the electrode assembly, and at least a part of the second protruding portion is located between the second end portion and the fourth wall; and
along the second direction, a projection of the third protruding portion partially overlaps the projection of the electrode assembly, at least a part of the third protruding portion is located between the third end portion and the fifth wall; a projection of the fourth protruding portion partially overlaps the projection of the electrode assembly; and at least a part of the fourth protruding portion is located between the fourth end portion and the sixth wall.

13. The secondary battery according to claim 1, **characterized in that** the shell further comprises a fifth wall and a sixth wall disposed opposite to each other along a second direction; the second direction, the first direction, and the thickness direction of the electrode assembly are perpendicular to each other; and along the second direction, a distance between an inner surface of the fifth wall and an inner surface of the sixth wall is L₁₀;
along the second direction, a length of the first protruding portion is L₁₁, satisfying: 0.6L₁₀ ≤ L₁₁ ≤ 0.9L₁₀; and/or
along the second direction, a minimum distance between the first protruding portion and the inner surface of the fifth wall is L₁₂, satisfying: 2 mm ≤ L₁₂ ≤ 0.2L₁₀.

14. The secondary battery according to claim 1, **characterized in that** the shell comprises a housing and a cover, the housing is provided with an opening, the cover closes the opening, and the first wall is the cover.

15. An electrochemical device, **characterized in that** the electrochemical device comprises the secondary battery according to any one of claims 1 to 14.
